# EUROPÄISCHE PATENTANMELDUNG

(11) **EP 4 814 531 A1**
(43) Veröffentlichungstag der Anmeldung: **30.09.2026**
(21) Anmeldenummer: 26162404.3
(22) Anmeldetag: 04.03.2026
(51) Int. Cl.: G01S 7/02, G01S 13/04, G01S 13/08, G01S 13/75, G01S 13/76, G01S 13/87, G01S 13/88, G08B 13/24, G08B 21/02

(54) **RADARGITTER**

(30) Priorität: 27.03.2025 DE 102025112016
(71) Anmelder: Pilz GmbH & Co. KG, 73760 Ostfildern (DE)
(72) Erfinder: Hoberg, Daniel, 73760 Ostfildern (DE); Bellingkrodt, Martin, 73760 Ostfildern (DE); Aziz, Fady, 73760 Ostfildern (DE)
(74) Vertreter: Witte, Weller & Partner Patentanwälte mbB

(57) **Zusammenfassung**

Schutzeinrichtung (10), aufweisend: ein Gehäuse (20), das an einem Rand einer Durchgangsöffnung (18) anordenbar ist, eine Vielzahl von Radareinheiten (30), die nebeneinander in dem Gehäuse (20) angeordnet sind und dazu eingerichtet sind, jeweils Radarsignale (22) parallel zueinander quer zu der Durchgangsöffnung (18) auszusenden sowie reflektierte Signale zu empfangen, und eine Auswerteeinheit, die dazu eingerichtet ist, für jede Radareinheit (30) eine Signalpaarung aus gesendeten und reflektierten Signalen auszuwerten, mit einer Erwartungshaltung für die Signalpaarung zu vergleichen, sowie eine Reaktion auszuführen, wenn die ausgewertete Signalpaarung nicht mit der Erwartungshaltung korreliert.

## Beschreibung

Die vorliegende Erfindung betrifft eine Schutzeinrichtung zur Absicherung einer Durchgangsöffnung. Im Folgenden wird die Schutzeinrichtung auch als Radargitter bezeichnet.

Lichtgitter sind in der Sicherheitstechnik seit langem bekannt. Lichtgitter sind optoelektronische Systeme, die aus einem Sender und einem Empfänger bestehen. Zwischen diesen beiden Komponenten wird ein unsichtbares Feld aus Lichtstrahlen (Infrarot, Laser etc.) erzeugt, das je nach Bauform und Anwendung unterschiedlich dicht sein kann. Diese Technologie wird im industriellen Umfeld in verschiedenen Bereichen eingesetzt, beispielsweise zur Positionserkennung, Objekterfassung oder zur Messung von Abständen und Formen. Lichtgitter zeichnen sich durch ihre hohe Präzision und Flexibilität aus und finden breite Anwendung in der Automatisierungstechnik, etwa in Produktions- und Montageprozessen. Sie ermöglichen eine schnelle, berührungslose Erkennung und erhöhen dadurch die Effizienz und Produktivität.

Sicherheitslichtgitter sind eine spezielle Form von Lichtgittern, die primär in sicherheitskritischen Anwendungen eingesetzt werden, um Personen und Maschinen vor Unfällen zu schützen. Sie dienen als Schutzvorrichtung, die Gefahrenbereiche absichern, ohne den Zugang vollständig zu versperren. Wird das Schutzfeld unterbrochen, etwa durch das Eindringen eines Körpers, Körperteils oder Objekts, registriert das Lichtgitter die Unterbrechung und löst eine definierte Sicherheitsreaktion aus, wie das Abschalten einer Maschine oder das Stoppen eines Prozesses. Diese Funktion macht sie besonders in der industriellen Fertigung unverzichtbar.

Ein Beispiel für moderne Sicherheitslichtgitter sind die von der Anmelderin vertriebenen Produkte der PSENopt- und PSENopt II-Serien. Diese Systeme bieten Schutz für Finger, Hände oder den gesamten Körper und erfüllen höchste Sicherheitsstandards, wie PL e gemäß EN ISO 13849-1. Sie ermöglichen barrierefreien Zugriff auf Maschinen und Anlagen und kombinieren Benutzerfreundlichkeit mit robustem Schutz. Die Lichtgitter unterstützen zudem zusätzliche Funktionen wie Muting, Blanking und Kaskadierung, die flexible Anwendungen ermöglichen, etwa in der Materialzuführung oder bei der Absicherung komplexer Anlagen. In Verbindung mit sicheren Steuerungssystemen bieten diese Sicherheitslichtgitter eine umfassende Lösung für die Absicherung in der sicheren Automatisierungstechnik.

Lichtgitter haben hinsichtlich ihrer Kosten und Funktionalität in den letzten Jahren ein hohes Maß an Optimierung erfahren, sodass sie für viele Anwendungen bereits ein ideales Preis-Leistungs-Verhältnis bieten. Durch Fortschritte in der Fertigungstechnologie, Materialauswahl und Design wurden die Effizienz und Zuverlässigkeit gesteigert, während die Produktionskosten kontinuierlich gesenkt werden konnten. Aufgrund dieser weitreichenden Optimierungen stoßen Lichtgitter nunmehr an physikalische und technologische Grenzen, die mit konventionellen Ansätzen nicht weiter überwunden werden können. Eine weitere signifikante Leistungssteigerung oder eine Anpassung an anspruchsvollere Anforderungen erfordert daher einen grundlegenden Technologiewechsel.

Vor diesem Hintergrund ist es eine Aufgabe, eine Schutzeinrichtung anzugeben, die auf dem Prinzip eines Lichtgitters beruht, sich kostengünstig realisieren lässt sowie zusätzliche Funktionalitäten und eine höhere Flexibilität bietet.

Gemäß einem Aspekt der vorliegenden Offenbarung wird diese Aufgabe durch eine Schutzeinrichtung gelöst, die Folgendes aufweist: ein Gehäuse, das an einem Rand einer Durchgangsöffnung anordenbar ist, eine Vielzahl von Radareinheiten, die nebeneinander in dem Gehäuse angeordnet sind und dazu eingerichtet sind, jeweils Radarsignale parallel zueinander quer zu der Durchgangsöffnung auszusenden sowie reflektierte Signale zu empfangen, und eine Auswerteeinheit, die dazu eingerichtet ist, für jede Radareinheit eine Signalpaarung aus gesendeten und reflektierten Signalen auszuwerten, mit einer Erwartungshaltung für die Signalpaarung zu vergleichen, sowie eine Reaktion auszuführen, wenn die ausgewertete Signalpaarung nicht mit der Erwartungshaltung korreliert.

Es ist somit die Idee, eine Schutzeinrichtung für die Absicherung von Durchgangsöffnungen oder Zugangsbereichen in der Automatisierungstechnik nach dem Prinzip eines Lichtgitters zu realisieren, jedoch unter Verwendung von Radartechnologie. Die Schutzeinrichtung weist ein Gehäuse auf, das so ausgestaltet ist, dass es am Rand einer Durchgangsöffnung angeordnet werden kann. Innerhalb dieses Gehäuses ist eine Vielzahl von Radareinheiten nebeneinander angeordnet. Der Begriff "nebeneinander" impliziert eine lineare oder zumindest in einer Ebene verlaufende Anordnung der Radareinheiten, sodass ein zusammenhängendes Überwachungsfeld über die Breite der Öffnung erzeugt werden kann. Jede dieser Radareinheiten ist so eingerichtet, dass sie Radarsignale aussendet, wobei die Richtung dieser Signale im Wesentlichen parallel zueinander verläuft und quer zur Durchgangsöffnung gerichtet ist. Das bedeutet, die Radarsignale verlaufen nicht entlang der Öffnung, sondern durch sie hindurch - von einer Seite zur anderen - und stehen dabei im Wesentlichen senkrecht zur Richtung, in der jemand die Öffnung typischerweise durchquert. Die Signale dienen dazu, Objekte oder Personen zu detektieren, die die Öffnung passieren. Hierfür ist eine Auswerteeinheit Bestandteil der Schutzeinrichtung, welche eine Signalanalyse durchführt. Die Auswerteeinheit ist dafür eingerichtet, für jede einzelne Radareinheit die ausgesendeten Signale mit den von Objekten reflektierten Signalen zu kombinieren, um eine Signalpaarung zu bilden. Die Auswertung dieser Signalpaare erfolgt im Abgleich mit einer Erwartungshaltung - das ist ein im System hinterlegtes Referenzmuster oder Modell, das typischerweise das Verhalten der Signale im ungestörten Zustand beschreibt. Wenn ein empfangenes Signalpaar nicht mit dieser Erwartungshaltung übereinstimmt - das heißt, wenn es Abweichungen gibt, die auf eine Veränderung oder Störung im Überwachungsbereich hindeuten -, reagiert die Auswerteeinheit. Die Art der Reaktion ist offen und kann beispielsweise ein Alarmsignal, das Stoppen einer Bewegungseinrichtung oder ein anderes sicherheitsrelevantes Eingreifen sein.

Ein solches "Radargitter" bietet im Gegensatz zu herkömmlichen optoelektronischen Lichtgittern eine Reihe von Vorteilen, die sowohl die Funktionalität als auch die Einsatzmöglichkeiten erweitern und verbessern. So liegt ein Vorteil des Radargitters bspw. in seiner Wetter- und Umgebungsresistenz. Radarsignale sind unempfindlich gegenüber äußeren Einflüssen wie Staub, Rauch, Nebel oder starkem Licht, die bei Lichtgittern häufig zu Fehlfunktionen oder Einschränkungen führen können. Dadurch eignet sich das Radargitter besonders für Anwendungen in rauen Umgebungen, wie in der Schwerindustrie, im Bergbau oder in Außenbereichen, wo hohe Anforderungen an die Robustheit der Schutzeinrichtung gestellt werden.

Die präzise Detektion und Auswertung der Signalpaarungen ermöglichen zudem eine zuverlässige Erkennung von Objekten oder Personen, die die Durchgangsöffnung passieren. Durch die nebeneinander angeordneten Radareinheiten kann eine dichte Abdeckung einer Öffnungsebene der Durchgangsöffnung erreicht werden, was eine hohe Detektionsgenauigkeit gewährleistet. Zusätzlich erlaubt die Signalverarbeitung in der Auswerteeinheit eine differenzierte Analyse, etwa zur Unterscheidung zwischen beweglichen und stationären Objekten.

Wie bei herkömmlichen Lichtgittern wird durch die Möglichkeit der berührungslosen Überwachung ein Materialfluss nicht beeinträchtigt, was die Produktivität und Effizienz in Produktions- und Logistikprozessen erhöht. Ferner bietet das Radargitter die Option, die Überwachung flexibel anzupassen, etwa durch programmierbare Parameter für die Detektionsschwelle oder die Empfindlichkeit.

Schließlich kann das Radargitter eine höhere Ausfallsicherheit und geringere Wartungsanforderungen im Vergleich zu optischen Systemen gewährleisten. Die robuste Bauweise und die Langlebigkeit der Radarkomponenten tragen dazu bei, dass die Schutzeinrichtung auch unter schwierigen Betriebsbedingungen zuverlässig arbeitet und weniger anfällig für Verschleiß oder Verschmutzung ist.

Insgesamt bietet das Radargitter eine Alternative zu herkömmlichen Lichtgittern, insbesondere in anspruchsvollen Umgebungen, wo Zuverlässigkeit, Flexibilität und Robustheit entscheidend sind.

In einer weiteren Ausgestaltung kann die Schutzeinrichtung ferner eine Strahlformungseinheit zur Bündelung der Radarsignale jeder Radareinheit aufweisen.

Die Ergänzung einer Strahlformungseinheit zur Bündelung der Radarsignale in der Schutzeinrichtung bietet weitere Vorteile, die die Leistungsfähigkeit und Effizienz des Radargitters steigern. Durch die Strahlformungseinheit können die von den einzelnen Radareinheiten ausgesendeten Radarsignale gezielt in eine eng definierte Richtung fokussiert werden. Dies führt zu einer Reduzierung der Streuung und verbessert die Signalstärke und Empfindlichkeit in der überwachten Ebene der Durchgangsöffnung.

Ferner liegt ein Vorteil der Bündelung in der erhöhten Detektionsgenauigkeit. Indem die Strahlen gezielt auf die Öffnungsebene fokussiert werden, wird die Erkennung von Objekten oder Personen präziser, da weniger Störungen durch Signale außerhalb des relevanten Bereichs entstehen. Dies ist besonders vorteilhaft in komplexen Umgebungen mit vielen potenziellen Reflexionen, wie in Produktionsanlagen mit metallischen Oberflächen. Die Bündelung der Signale ermöglicht zudem eine größere Reichweite der Radareinheiten, ohne dass zusätzliche Leistung erforderlich ist. Dies ist insbesondere bei großen Durchgangsöffnungen oder Anwendungen, bei denen eine hohe Reichweite erforderlich ist, von Vorteil. Gleichzeitig wird die Energieeffizienz des Systems verbessert, da die gesendete Leistung gezielt im Überwachungsbereich konzentriert wird.

Ein weiterer Vorteil ergibt sich aus der verbesserten Störunterdrückung. Durch die gezielte Bündelung der Strahlen wird die Wahrscheinlichkeit verringert, dass unerwünschte Reflexionen von Objekten außerhalb der Öffnungsebene in das System gelangen. Dies führt zu einer höheren Robustheit gegenüber äußeren Einflüssen und reduziert die Anzahl von Fehlalarmen.

Zusätzlich erlaubt die Strahlformungseinheit eine bessere Anpassung an spezifische Anforderungen. Die Form und Größe des Strahlbündels können je nach Anwendung variabel gestaltet werden, um eine optimale Abdeckung des Überwachungsbereichs zu gewährleisten. Dadurch wird die Flexibilität des Radargitters erhöht, was es für eine Vielzahl von Einsatzbereichen prädestiniert.

In einer weiteren Ausgestaltung kann jede Radareinheit eine separate Strahlformungseinheit aufweisen.

Die Ausgestaltung, bei der jede Radareinheit eine separate Strahlformungseinheit aufweist, bietet Vorteile in Bezug auf die Funktionalität und Anpassungsfähigkeit des Radargitters. Durch die individuelle Bündelung der Radarsignale jeder Einheit können die Strahlen präzise gesteuert und auf bestimmte Bereiche der Öffnungsebene ausgerichtet werden. Dies ermöglicht eine noch feinere räumliche Auflösung und verbessert die Fähigkeit des Systems, Objekte oder Personen genau zu lokalisieren.

Ferner kann die separate Strahlformung für jede Radareinheit die Flexibilität des Radargitters erhöhen. Unterschiedliche Strahlmuster können erzeugt werden, um den spezifischen Anforderungen einer Anwendung zu entsprechen. Beispielsweise könnten einige Strahlen enger fokussiert werden, um kleinere Objekte zu detektieren, während andere breiter gestreut sind, um größere Bereiche abzudecken. Diese Variabilität ist besonders in komplexen Sicherheitsanwendungen von Vorteil, bei denen sowohl große als auch kleine Gefahrenquellen erkannt werden müssen.

Ein weiterer Vorteil liegt in der Reduktion von Interferenzen zwischen den Radareinheiten. Durch die gezielte Ausrichtung der Strahlen kann die gegenseitige Beeinflussung minimiert werden, was die Signalqualität und die Zuverlässigkeit der Detektion verbessert. Dies ist besonders wichtig, wenn mehrere Einheiten dicht nebeneinander angeordnet sind, wie es bei einem Radargitter der Fall ist.

In einer weiteren Ausgestaltung weisen die Strahlformungseinheit bzw. die separaten Strahlformungseinheiten mindestens eine physikalische Strahlformungseinheit auf, insbesondere eine Parabolantenne, eine Phased-Array-Antenne, eine Hornantenne, eine Schlitzantenne und/oder eine Radarlinse.

Eine physikalische Strahlformungseinheit für ein Radarsignal kann insbesondere durch eine bestimmte Antenne oder Antennenanordnung realisiert werden. Diese sind darauf ausgelegt, Radarsignale gezielt zu bündeln und präzise auszurichten, was die Leistungsfähigkeit des Systems verbessern kann.

Eine Parabolantenne ermöglicht durch ihre reflektierende, gekrümmte Oberfläche eine starke Fokussierung der Radarsignale. Dies führt zu einer hohen Signalstärke und Reichweite, wodurch auch weit entfernte Objekte oder kleine Veränderungen in der Öffnungsebene zuverlässig erkannt werden können. Parabolantennen sind besonders geeignet, wenn ein stark konzentrierter Strahl für eine präzise Detektion erforderlich ist.

Phased-Array-Antennen bieten die zusätzliche Fähigkeit, die Strahlrichtung elektronisch zu steuern, ohne dass mechanische Bewegungen erforderlich sind. Dies ermöglicht eine äußerst flexible und schnelle Anpassung des Überwachungsbereichs, beispielsweise um auf dynamische Veränderungen in der Umgebung zu reagieren. Diese Technologie erhöht die Effizienz und reduziert die Reaktionszeit des Radargitters, was insbesondere in sicherheitskritischen Anwendungen von Vorteil ist.

Hornantennen zeichnen sich durch ihre robuste Bauweise und ihren gleichmäßigen Strahlverlauf aus. Sie eignen sich für Umgebungen, in denen eine gleichmäßige Abdeckung des Schutzbereichs bei gleichzeitig hoher Signalstärke erforderlich ist. Ihre geringe Anfälligkeit gegenüber Umgebungsstörungen wie Staub oder Feuchtigkeit macht sie besonders geeignet für industrielle Anwendungen.

Schlitzantennen ermöglichen eine kompakte Bauform und bieten gleichzeitig eine hohe Präzision in der Strahlformung. Sie sind ideal für Anwendungen, bei denen Platz eine kritische Rolle spielt, etwa in schmalen Durchgangsöffnungen oder bei komplexen Anlagendesigns. Zudem können sie durch die gezielte Anordnung von Schlitzen spezifische Strahlmuster erzeugen, die auf die Anforderungen der jeweiligen Anwendung zugeschnitten sind.

Radarlinsen sind speziell geformte, meist aus dielektrischem Material bestehende Bauelemente, die dazu dienen, Radarstrahlung gezielt zu bündeln, umzulenken oder zu fokussieren, ähnlich wie optische Linsen mit Lichtstrahlen arbeiten. Sie ermöglichen eine definierte Formung des Radarstrahls, ohne dass mechanisch bewegliche Teile oder komplexe elektronische Phased-Array-Technik erforderlich sind. Ein wesentlicher Vorteil von Radarlinsen liegt in ihrer Einfachheit, Robustheit und kosteneffizienten Herstellung, insbesondere bei stationären Anwendungen. Zudem lassen sie sich kompakt in das Design von Radarsystemen integrieren - häufig als Bestandteil des Radoms -, wodurch sie gleichzeitig als Schutzabdeckung und strahlformendes Element fungieren können. Dies reduziert die Bauteilanzahl, verbessert die Witterungsbeständigkeit und ermöglicht eine präzise, stabile Strahlführung über längere Zeiträume hinweg.

Die Verwendung solcher physikalischen Strahlformungseinheiten verbessert nicht nur die Präzision und Reichweite des Radargitters, sondern erhöht auch dessen Robustheit und Vielseitigkeit. Die Wahl des Antennentyps kann an die spezifischen Anforderungen der Anwendung angepasst werden, wodurch das System flexibel und effizient einsetzbar bleibt.

In einer weiteren Ausgestaltung können die Strahlformungseinheit und die separaten Strahlformungseinheiten mindestens eine softwarebasierte Strahlformungseinheit aufweisen.

Softwarebasierte Strahlformung, oft als Digital Beamforming (DBF) bezeichnet, ermöglicht die dynamische Steuerung und Modifikation der Strahlmuster durch rein digitale Signalverarbeitung, vorzugsweise ohne physikalische Änderungen an der Antennenstruktur vorzunehmen. Diese Ausgestaltung trägt somit zu einer besonders einfachen und kostengünstigen Strahlformung bei.

In einer weiteren Ausgestaltung kann die Vielzahl von Radareinheiten mit Abständen dazwischen nebeneinander entlang einer Längsrichtung des Gehäuses ausgerichtet sein.

Die Anordnung der Vielzahl von Radareinheiten mit Abständen dazwischen entlang einer Längsrichtung des Gehäuses bietet eine Architektur, die an ein herkömmliches Lichtgitter erinnert, jedoch die optoelektronischen Komponenten durch Radartechnologie ersetzt. Diese Konfiguration ermöglicht es, die bewährte Form und Bauweise eines Lichtgitters beizubehalten, wodurch eine einfache Integration in bestehende Systeme und Anwendungen möglich wird. Gleichzeitig werden die Vorteile der Radartechnologie genutzt, um die Leistung und Flexibilität der Schutzeinrichtung, wie zuvor beschrieben, zu verbessern.

In einer weiteren Ausgestaltung kann die Auswerteeinheit dazu eingerichtet sein, bei einem Ausbleiben der reflektierten Signale die Reaktion auszulösen.

Die Ausgestaltung, bei der eine Unterbrechung einer Signalpaarung durch das Ausbleiben reflektierter Signale detektiert wird, bietet eine robuste und flexible Methode zur Überwachung von Durchgangsöffnungen. Dieser Ansatz konzentriert sich primär darauf, ob eine Reflexion erkannt wird oder nicht, ohne auf die spezifischen Eigenschaften der Reflexion angewiesen zu sein. Dadurch wird die Schutzeinrichtung unempfindlich gegenüber Variationen in den Reflexionsbedingungen, wie sie durch unterschiedliche Oberflächenbeschaffenheiten, Materialien oder Umweltfaktoren entstehen können.

Die Ausgestaltung ermöglicht somit eine erhöhte Anpassungsfähigkeit des Systems. Da für die Detektion keine spezifischen Eigenschaften der reflektierten Signale analysiert werden müssen, kann die Schutzeinrichtung in einer Vielzahl von Szenarien eingesetzt werden, einschließlich solcher mit schwierigen oder wechselnden Reflexionsbedingungen. Dies erweitert die Anwendungsbereiche und ermöglicht den Einsatz in anspruchsvollen Umgebungen wie staubigen, feuchten oder stark reflektierenden Bereichen, in denen herkömmliche Technologien an ihre Grenzen stoßen.

In einer weiteren Ausgestaltung ist die Auswerteeinheit dazu eingerichtet, eine Abstandsmessung anhand der Signalpaarung durchzuführen und die Reaktion auszulösen, wenn die Abstandsmessung von einem vordefinierten Wert abweicht.

Durch die Integration einer Abstandsmessung kann die Schutzeinrichtung nicht nur erkennen, ob eine Reflexion ausbleibt, sondern auch feststellen, ob sich ein Objekt innerhalb eines festgelegten Sicherheitsbereichs befindet. Dies ermöglicht eine feinere Kontrolle und erhöht die Flexibilität, da spezifische Sicherheitszonen definiert werden können, die nur bei Abweichungen vom erwarteten Abstand eine Reaktion auslösen. Diese Methode ist besonders nützlich in Umgebungen mit variablen Bedingungen, wie Produktionsanlagen mit unterschiedlich großen Objekten oder Arbeitsbereichen mit wechselnden Gegebenheiten. Zusätzlich ermöglicht die Abstandsmessung eine bessere Differenzierung zwischen Objekten, wodurch Fehlalarme durch harmlose Veränderungen in der Umgebung reduziert werden können. Die Fähigkeit, präzise Abstände zu überwachen, erhöht somit zusätzlich die Sicherheit und Effizienz des Systems, da es auf eine breitere Palette von Anforderungen zugeschnitten werden kann.

In einer weiteren Ausgestaltung weist die Schutzeinrichtung eine von dem Gehäuse getrennte Reflexionseinheit auf, die an einem dem Gehäuse gegenüberliegenden Rand der Durchgangsöffnung anordenbar und dazu eingerichtet ist, die von der Vielzahl von Radareinheiten ausgesandten Radarsignale zu reflektieren.

Durch die gezielte Platzierung der Reflexionseinheit wird ein definiertes und kontrolliertes Reflexionsverhalten gewährleistet, das eine präzise Signalpaarung zwischen den Radareinheiten und den reflektierten Signalen ermöglicht. Dies erhöht die Genauigkeit der Detektion und minimiert die Wahrscheinlichkeit von Fehlalarmen, da die Reflexion unabhängig von den Eigenschaften der Umgebung sichergestellt wird. Ferner können durch die Reflexionseinheit Totbereiche ausgeschlossen werden, da die Signale gezielt zurückgeführt und somit lückenlos alle Bereiche innerhalb der Öffnung überwacht werden. Diese Flexibilität ermöglicht eine optimale Anpassung der Schutzeinrichtung an verschiedene geometrische und sicherheitstechnische Anforderungen, insbesondere bei komplexen oder großflächigen Durchgangsbereichen. Bei den Reflexionseinheit kann es sich um aktive oder passive Reflektoren handeln.

In einer weiteren Ausgestaltung ist die Reflexionseinheit dazu eingerichtet, eingehende Radarsignale zu reflektieren und zu modifizieren, um zusätzliche Informationen in den reflektierten Signalen zu codieren, insbesondere durch Phasen- oder Frequenzmodulation. Hierbei kann es sich um passive RFID-Tags handeln, die dem reflektierten Signal eine individuelle Kennung aufprägen.

Durch die Codierung zusätzlicher Informationen, etwa mittels Phasen- oder Frequenzmodulation, können die reflektierten Signale mit einer individuellen Kennung versehen werden. Dies erleichtert die eindeutige Zuordnung der Signalpaare, insbesondere in Szenarien mit mehreren Reflexionseinheiten oder komplexen Überwachungsbereichen. Die Individualisierung der Signale verbessert die Detektionsgenauigkeit und reduziert die Wahrscheinlichkeit von Fehlinterpretationen durch Signalüberlagerungen oder externe Störungen. Ebenso bietet die modifizierte Reflexion Vorteile bei fortschrittlichen Verfahren wie Muting, da die kodierten Informationen genutzt werden können, um gezielt bestimmte Bereiche temporär von der Überwachung auszunehmen, ohne die Gesamtfunktionalität des Systems zu beeinträchtigen. Ebenso kann eine Signalmodifikation zur effizienten Synchronisation mehrerer Radareinheiten beitragen.

In einer weiteren Ausgestaltung ist die Auswerteeinheit dazu eingerichtet, die Reaktion auszulösen, wenn die zusätzlichen Informationen nicht oder unvollständig empfangen werden.

Durch die Überwachung der codierten Zusatzinformationen kann sichergestellt werden, dass nicht nur das Vorhandensein einer Reflexion registriert wird, sondern auch deren Integrität überprüft wird. Dies erhöht die Zuverlässigkeit der Signalpaarung, da unvollständige oder fehlerhafte Signale auf potenzielle Unterbrechungen oder Störungen hinweisen können. Die Auswertung wird dadurch robuster gegenüber externen Einflüssen wie Signalrauschen oder Umgebungsinterferenzen. Gleichzeitig ermöglicht diese Methode eine verbesserte Differenzierung zwischen gewollten und ungewollten Reflexionen, was die Genauigkeit des Systems weiter steigert.

In einer weiteren Ausgestaltung weist die Reflexionseinheit eine Vielzahl von Reflexionseinheiten auf. Insbesondere kann jede Reflexionseinheit der Vielzahl von Reflexionseinheiten jeweils einer Radareinheit der Vielzahl von Radareinheiten zugeordnet sein, und jede Reflexionseinheit der Vielzahl von Reflexionseinheiten kann dazu eingerichtet sein, die jeweils reflektierten Signale mit eindeutigen Identifikationsdaten zu codieren.

Durch die eindeutige Zuordnung jeder Radareinheit zu einer spezifischen Reflexionseinheit kann eine Signalpaarung optimiert werden, da jede Reflexionseinheit nur mit dem Signal ihrer entsprechenden Radareinheit interagiert. Dies minimiert die Wahrscheinlichkeit von Signalüberlagerungen oder Interferenzen und sorgt für eine klare und zuverlässige Detektion. Darüber hinaus kann jede Reflexionseinheit individuell angepasst werden, um spezifische Reflexionseigenschaften wie Winkel oder Modulationsmuster zu erzeugen, was die Flexibilität des Systems erhöht. Diese Struktur ermöglicht eine effizientere Abdeckung und Auswertung, insbesondere in komplexen Überwachungsbereichen mit hohen Sicherheitsanforderungen, da die individuelle Signalführung eine lückenlose und genaue Überwachung gewährleistet.

In einer weiteren Ausgestaltung sind die Radarsignale elektromagnetische Strahlung im Frequenzbereich von 2 GHz bis 325 GHz, vorzugsweise im Bereich von 57 GHz bis 64 GHz.

Die hohen Frequenzen ermöglichen eine präzise Signalbündelung und eine verbesserte Auflösung, wodurch selbst kleine Objekte oder feine Bewegungen innerhalb der Überwachungsebene zuverlässig detektiert werden können. Der Frequenzbereich um 60 GHz ist besonders geeignet, da er eine optimale Balance zwischen Reichweite und Detailgenauigkeit bietet und gleichzeitig weniger anfällig für Störungen durch Umgebungsfaktoren wie Regen oder Staub ist. Zudem ermöglicht dieser Bereich den Einsatz kompakter Antennen, was die Integration in schlanke und platzsparende Gehäuse erleichtert. Die hohe Frequenz sorgt außerdem für eine geringere Wellenlänge, was eine präzisere Abstandsmessung und Signalverarbeitung ermöglicht. Diese Eigenschaften machen die Schutzeinrichtung besonders geeignet für sicherheitskritische Anwendungen in engen oder komplexen Umgebungen, in denen hohe Genauigkeit und Zuverlässigkeit erforderlich sind.

In einer weiteren Ausgestaltung ist jede der Radareinheiten ein Ein-Chip-Radarsensor, insbesondere mit einer integrierten Antenne auf oder in einem den Ein-Chip-Radarsensor umschließenden Gehäuse.

Die Ausgestaltung, bei der jede Radareinheit als Ein-Chip-Radarsensor mit integrierter Antenne ausgeführt ist, bietet verschiedene Vorteile hinsichtlich Kompaktheit, Effizienz und Kosteneffektivität. Durch die Integration aller wesentlichen Funktionen, einschließlich der Antenne, auf einem einzigen Chip wird der Platzbedarf der einzelnen Radareinheiten stark reduziert, was die Konstruktion schlanker und platzsparender Gehäuse ermöglicht. Diese Bauweise vereinfacht zudem die Herstellung und Montage, da weniger separate Komponenten erforderlich sind, was zu einer Senkung der Produktions- und Wartungskosten führt. Die Integration der Antenne sorgt für eine optimale Abstimmung zwischen den Komponenten, wodurch die Signalqualität und -zuverlässigkeit erhöht werden. Ein weiterer Vorteil liegt in der verbesserten Skalierbarkeit des Systems, da die modularen Ein-Chip-Radarsensoren einfach zu größeren Arrays kombiniert werden können, um die Schutzeinrichtung an unterschiedliche Anforderungen anzupassen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 zeigt exemplarisch ein Anwendungsbeispiel für eine berührungslos wirkende Schutzeinrichtung gemäß der vorliegenden Offenbarung.
Fig. 2A zeigt die Schutzeinrichtung gemäß Fig. 1 in einer schematischen Frontalansicht.
Fig. 2B zeigt die Schutzeinrichtung gemäß Fig. 1 in einer Draufsicht.
Fig. 3 zeigt eine Schutzeinrichtung gemäß Fig. 1 mit zusätzlichen Reflexionseinheiten.

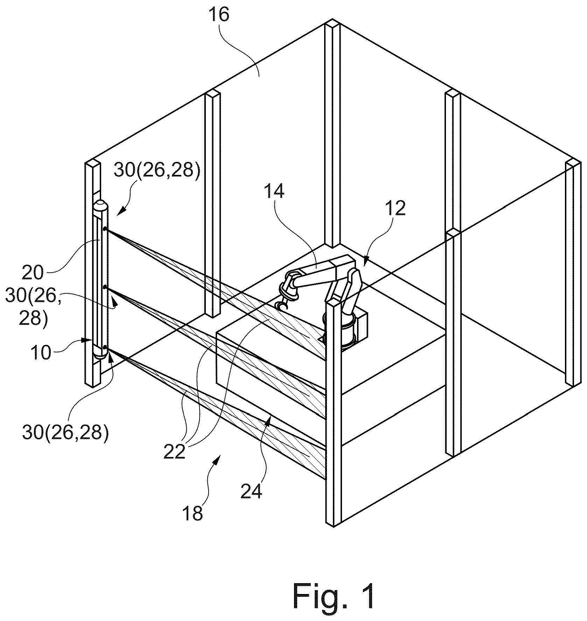

Fig. 1 zeigt exemplarisch ein Anwendungsbeispiel für eine berührungslos wirkende Schutzeinrichtung, im Folgenden kurz Radargitter genannt, gemäß der vorliegenden Offenbarung. Die Schutzeinrichtung ist in ihrer Gesamtheit mit der Bezugsziffer 10 bezeichnet. Die Schutzeinrichtung ist hier als eine Komponente einer Absicherung für eine technische Anlage 12 vorgesehen. Die technische Anlage 12 ist in diesem Beispiel durch einen Industrieroboter 14 angedeutet, dessen Bewegungsbereich einen Gefahrenbereich für Personen im Umfeld des Industrieroboters 14 darstellt.

Zur Absicherung des Gefahrenbereichs enthält die Absicherungseinrichtung zwei Komponenten. Eine erste Komponente ist hier eine physische Barriere 16, die die technische Anlage 12 von drei Seiten her umschließt und einen Zugang zu der technischen Anlage 12 von diesen drei Seiten verhindert. Physische Barrieren können Schutzzäune, Schutzgitter oder anderweitige Einfriedungen sein.

An der vierten Seite weist die physische Barriere 16 eine Durchgangsöffnung 18 auf. Durch die Durchgangsöffnung 18 ist ein Zutritt zu der technischen Anlage 12 möglich. Zur Absicherung der Durchgangsöffnung 18 ist das hierin offenbarte Radargitter 10 vorgesehen. Das Radargitter 10 ist in einem Gehäuse 20 angeordnet, das sich auf einer Seite der Durchgangsöffnung 18 entlang dieser erstreckt. Das Gehäuse 20 kann beispielsweise an einem Stützträger der physischen Barriere 16 angeordnet sein und sich über die gesamte Länge der Durchgangsöffnung 18 erstrecken. Das Radargitter 10 sendet eine Vielzahl von Radarsignalen 22 aus, um eine Schutzebene (24) zu definieren, die sich über die Durchgangsöffnung erstreckt. Die Schutzebene (24) entspricht somit einer Öffnungsebene der Durchgangsöffnung.

Wie nachfolgend noch näher erläutert wird, ist das Radargitter 10 dazu ausgebildet, eine Reaktion auszulösen, wenn die reflektierten Radarsignal nicht einer bestimmten Erwartung entsprechen und so eine Unterbrechung der Radarsignale 22 in der Schutzebene 24 signalisieren. Beispielsweise kann das Radargitter 10 kontinuierlich ein Freigabesignal ausgeben, solange keine Unterbrechung der Radarsignale 22 in der Schutzebene 24 registriert wird. Mit anderen Worten: Das Radargitter 10 signalisiert so lange einen sicheren Zustand, bis die Radarsignale 22 unterbrochen werden, beispielsweise wenn eine Person sich unbefugt der technischen Anlage 12 durch die Durchgangsöffnung 18 nähert. Das Freigabesignal kann an eine Sicherheitssteuerung (hier nicht dargestellt) übertragen werden, welche den Industrieroboter 14 in einen sicheren Zustand versetzt, falls das Freigabesignal ausbleibt. Insbesondere kann die Sicherheitssteuerung eine Stromzufuhr zu dem Industrieroboter 14 abschalten und diesen auf diese Weise stillsetzen. Das Freigabesignal kann ein aus der Sicherheitstechnik bekanntes OSSD-Signal sein. Vorzugsweise wird das Freigabesignal aus zwei redundanten OSSD-Signalen gebildet.

Das Radargitter 10 weist einzelne in dem Gehäuse 20 nebeneinander angeordnete Sendeeinheiten 26 auf, die jeweils Radarsignale 22 entlang der Schutzebene 24 aussenden, die auf der gegenüberliegenden Seite der Durchgangsöffnung 18 reflektiert werden. Die reflektierten Signale werden von entsprechenden Empfangseinheiten 28, die ebenfalls im Gehäuse 20 angeordnet sind, empfangen. Jeder Sendeeinheit 26 und der dazugehörigen Empfangseinheit 28 ist somit eine Signalpaarung aus gesendeten und reflektierten Signalen zugeordnet. Eine Sendeeinheit 26 und eine Empfangseinheit 28 können in einer Einheit integriert sein, die im Folgenden als Radareinheit 30 bezeichnet wird.

Eine Unterbrechung der Radarsignale 22 wird dann erkannt, wenn eine Signalpaarung nicht entsprechend einer vordefinierten Erwartung registriert wird. Dies ist dann der Fall, wenn die Signalpaarung ein Objekt in einem Abstand anzeigt, der geringer ist als der Abstand zwischen der einen Seite der Durchgangsöffnung 18, an der das Gehäuse 20 des Radargitters 10 angeordnet ist, und der gegenüberliegenden Seite der Durchgangsöffnung 18, an der die Radarsignale reflektiert werden, wenn sich kein Objekt in der Schutzebene 24 befindet. Anders ausgedrückt, können bei dem Radargitter 10 eine Vielzahl von Abstandsmessungen in der Schutzebene 24 durch die Radareinheiten 30 durchgeführt werden, wobei die Detektion von Objekten innerhalb der Durchgangsöffnung als Unterbrechung der Schutzebene 24 gewertet wird, woraufhin eine entsprechende Reaktion ausgelöst wird.

Sicherheitstechnisch betrachtet, arbeitet das Radargitter 10 folglich wie ein herkömmliches Lichtgitter, wobei lediglich die Technologie zum Aufspannen des Schutzfelds eine andere ist. Grundsätzlich ließe sich auch mit einer einzelnen oder ein paar wenigen Radareinheiten eine flächige Überwachung realisieren. Die Anlehnung an bestehende Lichtgitter hat aber mannigfaltige Vorteile. Insbesondere kann ein Anwendungsentwickler das Radargitter prinzipiell genauso einsetzen wie ein bisheriges Lichtgitter. Ebenso lassen sich bestehende Lichtgitter einfach durch Radargitter ersetzen.

Ein weiterer Vorteil von Lichtgittern, der auch bei dem Radargitter erreicht werden kann, ist die platzsparende Ausbildung der Geräte und der geringe Verbrauch von Produktionsplatz in einer Fabrikhalle. So kann ein Radargitter in einem Gehäuse untergebracht sein, das eine Breite, d.h. eine Abmessung senkrecht zu der Schutzebene 24, von wenigen Zentimetern, bspw. zwischen 3 cm und 4 cm, aufweist. Damit ist das Radargitter 10 nicht viel breiter als ein normaler Schutzzaun und vereinnahmt dementsprechend wenig Produktionsfläche.

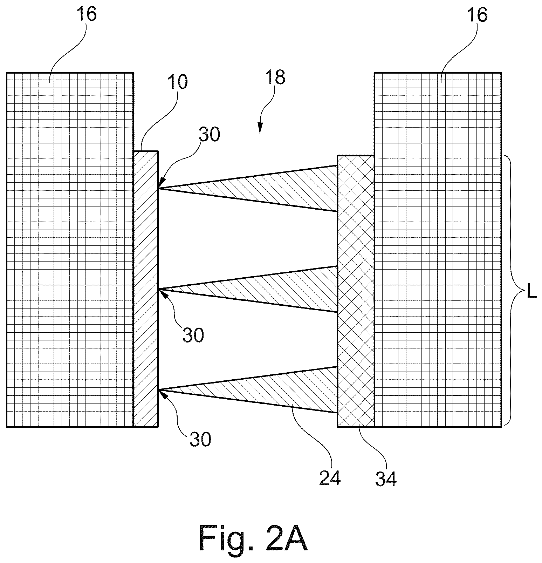

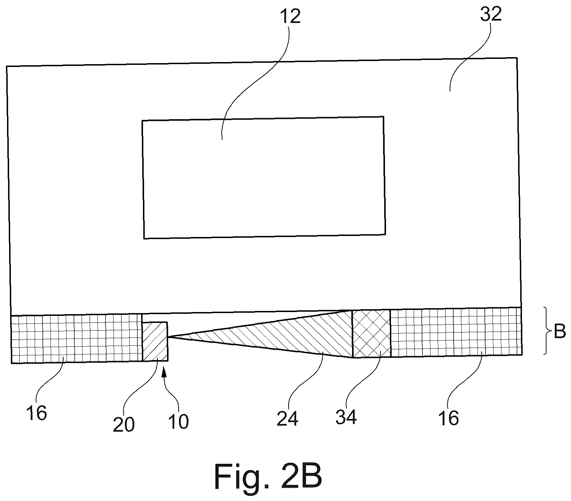

Fig. 2A und Fig. 2B zeigen das Radargitter 10 gemäß Fig. 1 in einer schematischen Ansicht. Gleiche Bezugszeichen bezeichnen gleiche Teile wie in Fig. 1. Fig. 2A ist eine Frontalansicht auf die Durchgangsöffnung 18, während Fig. 2B eine Draufsicht auf die technische Anlage 12 und das Radargitter 10 darstellt.

Die Durchgangsöffnung 18 ist an zwei Seiten von physischen Barrieren 16 begrenzt. An einer Seite ist das Radargitter 10 angeordnet. Das Radargitter 10 weist eine Vielzahl von Radareinheiten 30 auf, die Radarsignale in Richtung der anderen Seite senden. Exemplarisch sind hier drei Radareinheiten 30 angedeutet. Es versteht sich, dass die Anzahl der Radareinheiten 30 abhängig von der Länge L des Radargitters oder der gewünschten Auflösung skaliert werden kann.

Wie aus der Draufsicht in Fig. 2B ersichtlich, entspricht eine Breite B des Gehäuses 20 des Radargitters 10 in etwa der Breite eines Schutzzauns, der hier die physische Barriere 16 darstellt. Auf diese Weise wird möglichst wenig Produktionsfläche 32 beansprucht.

Um eine Ausdehnung der Radarsignale 22 in Richtung der Länge L sowie der Breite B zu verringern, kann die Radarstrahlung durch geeignete Strahlformungsmittel gebündelt werden. Strahlformungsmittel können, wie bei einem optischen Lichtgitter, physikalische Strahlformungsmittel beinhalten, die eine Bündelung der Radarstrahlen ermöglichen. Physikalische Strahlformungsmittel können bei einem Radargitter 10 beispielsweise bestimmte Antennenanordnungen, Antennenformen, oder Radarlinsen beinhalten. Denkbar ist zudem eine softwarebasierte Strahlformung, oft auch als Digital Beamforming bezeichnet. Hierbei erfolgt die Strahlformung beispielsweise durch die Verwendung einer Phased-Array-Antenne und entsprechender Signalverarbeitung. In verschiedenen Ausführungen können die verschiedenen Strahlformungsmittel auch miteinander kombiniert werden, um eine möglichst starke Bündelung und Fokussierung zu erreichen.

Durch die Bündelung und Fokussierung kann erreicht werden, dass das Radargitter 10 nicht über die Breite B seines Gehäuses 20 hinaus wirkt und unnötige Produktionsfläche 32 vereinnahmt. Ferner wird durch die Bündelung und Fokussierung erreicht, dass eine Dichte der nebeneinanderliegenden Radareinheiten 30 erhöht werden kann, ohne dass sich die Radareinheiten 30 gegenseitig beeinflussen. Auf diese Weise kann die Auflösung des Radargitters vorteilhaft erhöht werden.

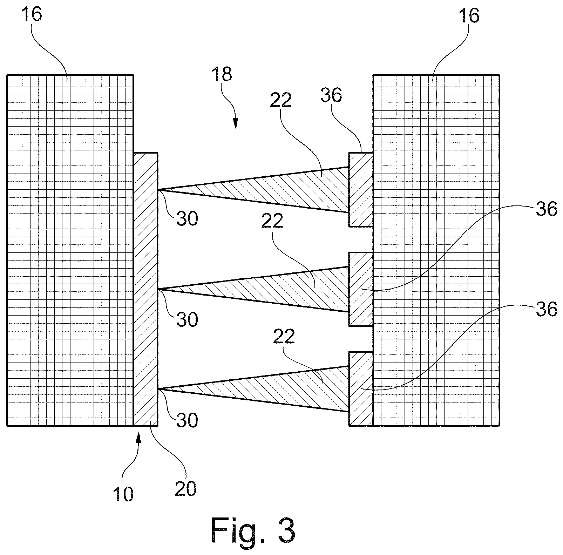

In Fig. 2A und 2B sind ferner Blindbereiche 34 angedeutet. Blindbereiche sind Bereiche, in denen eine Erfassung nicht möglich oder eingeschränkt ist. Im Falle von Radar können solche Blindbereiche vor metallischen Objekten auftreten, wie einem Träger des Schutzzauns. Sollten diese Blindbereiche 34 für einen bestimmten Anwendungsfall zu groß werden und eine zuverlässige Erkennung von Objekten und Personen verhindern, können, wie in Fig. 3 im Folgenden dargestellt, zusätzliche Einrichtungen vorgesehen sein, mit denen die Blindbereiche 34 aufgelöst oder verringert werden.

Fig. 3 zeigt eine Radargitteranordnung wie in Fig. 2A. Auch hier sind gleiche Teile wie in Fig. 2A mit den gleichen Bezugszeichen versehen.

Bei der Radargitteranordnung gemäß Fig. 3 sind zusätzlich von dem Radargitter 10 getrennte Reflexionseinheiten 36, sogenannte Radartags, vorgesehen. Die Reflexionseinheiten 36 sind an einer dem Gehäuse 20 des Radargitters 10 gegenüberliegenden Seite der Durchgangsöffnung 18 angeordnet. In dem vorliegenden Beispiel ist jeder Radareinheit 30 eine Reflexionseinheit 36 zugeordnet.

Die Reflexionseinheiten 36 reflektieren die von den Radareinheiten 30 ausgesandten Radarsignale auf eine definierte und festgelegte Weise. So können Blindbereiche effektiv vermieden werden. Ferner können durch die Reflexionseinheiten 36 die reflektierten Signale individuell gekennzeichnet werden, wodurch die Bildung von Signalpaarungen für eine Radareinheit 30 vereinfacht wird. Darüber hinaus lassen sich durch die individuelle Codierung der reflektierten Signale weitere Funktionen an dem Radargitter 10 umsetzen, ähnlich wie bei optischen Lichtgittern, bei denen eine Codierung der Lichtstrahlen beispielsweise durch vordefinierte Pulsfolgen erfolgt.

In dem Beispiel gemäß Fig. 3 sind separate Reflexionseinheiten 36 für jede Radareinheit 30 dargestellt. In einem anderen Beispiel kann auch nur eine Reflexionseinheit vorgesehen sein, die die Radarsignale 22 aller Radareinheiten 30 reflektiert. Zudem können auch die individuellen Reflexionseinheiten 36 in einem Gehäuse, ähnlich dem Gehäuse 20 des Radargitters 10, angeordnet sein, wodurch eine Montage des Radargitters 10 und der Reflexionseinheiten 36 vereinfacht werden kann, da nur zwei Gehäuse zueinander ausgerichtet werden müssen.

Neben der Verwendung von Reflektoren können auch softwarebasierte Einmessverfahren zum Einsatz kommen. Bei der Einmessung wird die vorhandene Struktur der Gitter exakt vermessen, um später im Betrieb Abweichungen von der Erwartungshaltung noch zuverlässiger erkennen und bewerten zu können.

In allen hier dargestellten Ausführungsbeispielen können die Radareinheiten 30 individuelle Einheiten sein, die jeweils einen dedizierten Radarchip und eine Antennenanordnung aufweisen. In anderen Ausführungsbeispielen können die Radareinheiten auch nur separate Antennenanordnungen aufweisen, wobei die Signalerzeugung und -auswertung von einer zentralen Einheit ausgeführt werden, die mit den einzelnen Antennen gekoppelt ist. Ein Radarchip für eine Radareinheit könnte beispielsweise auf einem Ein-Chip-Radarsensor basieren, der für einen Frequenzbereich von 60 bis 64 GHz ausgelegt ist. Ein solcher Chip kann in einem kompakten Gehäuse integriert sein, welches auch eine Antennenanordnung aufweist (Antennen-on-Package (AOP)). Hierdurch können zusätzliche externe Antennen entfallen. Auf dem Chip können als System-on-Chip (SoC) ein digitaler Signalprozessor (DSP), eine allgemeine Verarbeitungseinheit (CPU) sowie umfassende Signalverarbeitungs- und Datenmanagement-Funktionalitäten integriert sein, um unter anderem Echtzeitanforderungen zu genügen.

Die Auswerteeinheit könnte hierbei durch die allgemeine Verarbeitungseinheit realisiert sein oder aber durch einen separaten Controller, beispielsweise einer Safety-CPU, die auch für die Bereitstellung des Freigabesignals, d.h. der OSSD-Signale, verantwortlich ist.

Grundsätzlich ist das Radargitter nicht auf eine bestimmte Form der Radareinheiten beschränkt, solange sich damit die grundsätzliche Funktionalität eines herkömmlichen Lichtgitters replizieren lässt.

Es wird darauf hingewiesen, dass die vorstehenden Ausführungsbeispiele nur exemplarisch sind und weitere Varianten einzelner Komponenten möglich sind, um Ausgestaltungen der nachfolgenden Ansprüche zu realisieren. Der Schutzumfang der vorliegenden Erfindung wird durch die folgenden Ansprüche bestimmt und ist nicht durch die in der Beschreibung erläuterten oder in den Figuren dargestellten Merkmale begrenzt.

### Bezugszeichenliste

- 10: Radargitter
- 12: technische Anlage
- 14: Industrieroboter
- 16: physische Barriere
- 18: Durchgangsöffnung
- 20: Gehäuse
- 22: Radarsignal
- 24: Schutzebene/Öffnungsebene der Durchgangsöffnung
- 26: Sendeeinheit
- 28: Empfangseinheit
- 30: Radareinheit
- 32: Produktionsfläche
- 34: Blindbereich
- 36: Reflexionseinheit (Radartag)
- B: Breite
- L: Längsrichtung

## Patentansprüche

1. Schutzeinrichtung (10), aufweisend:
ein Gehäuse (20), das an einem Rand einer Durchgangsöffnung (18) anordenbar ist,
eine Vielzahl von Radareinheiten (30), die nebeneinander in dem Gehäuse (20) angeordnet sind und dazu eingerichtet sind, jeweils Radarsignale (22) parallel zueinander quer zu der Durchgangsöffnung (18) auszusenden sowie reflektierte Signale zu empfangen, und
eine Auswerteeinheit, die dazu eingerichtet ist, für jede Radareinheit (30) eine Signalpaarung aus gesendeten und reflektierten Signalen auszuwerten, mit einer Erwartungshaltung für die Signalpaarung zu vergleichen, sowie eine Reaktion auszuführen, wenn die ausgewertete Signalpaarung nicht mit der Erwartungshaltung korreliert.

2. Schutzeinrichtung nach Anspruch 1, ferner aufweisend: eine Strahlformungseinheit zur Bündelung der Radarsignale (22) jeder Radareinheit (30).

3. Schutzeinrichtung nach Anspruch 2, wobei jede Radareinheit (30) eine separate Strahlformungseinheit aufweist.

4. Schutzeinrichtung nach Anspruch 2 oder 3, wobei die Strahlformungseinheit bzw. die separaten Strahlformungseinheiten mindestens eine physikalische Strahlformungseinheit aufweist, insbesondere eine Parabolantenne, eine Phased-Array-Antenne, eine Hornantenne, eine Schlitzantenne und/oder eine Radarlinse.

5. Schutzeinrichtung nach einem der Ansprüche 2 bis 4, wobei die Strahlformungseinheit bzw. die separaten Strahlformungseinheiten mindestens eine softwarebasierte Strahlformungseinheit aufweist.

6. Schutzeinrichtung nach einem der Ansprüche 1 bis 5, wobei die Vielzahl von Radareinheiten (30) mit Abständen dazwischen nebeneinander entlang einer Längsrichtung L des Gehäuses (20) ausgerichtet ist.

7. Schutzeinrichtung nach einem der Ansprüche 1 bis 6, wobei die Auswerteeinheit dazu eingerichtet ist, bei einem Ausbleiben der reflektierten Signale die Reaktion auszulösen.

8. Schutzeinrichtung nach einem der Ansprüche 1 bis 7, wobei die Auswerteeinheit dazu eingerichtet ist, eine Abstandsmessung anhand der Signalpaarung durchzuführen und die Reaktion auszulösen, wenn die Abstandsmessung von einem vordefinierten Wert abweicht.

9. Schutzeinrichtung nach einem der Ansprüche 1 bis 8, ferner aufweisend: eine von dem Gehäuse (20) getrennte Reflexionseinheit (36), die an einem dem Gehäuse (20) gegenüberliegenden Rand der Durchgangsöffnung (18) anordenbar und dazu eingerichtet ist, die von der Vielzahl von Radareinheiten (30) ausgesandten Radarsignale (22) zu reflektieren.

10. Schutzeinrichtung nach Anspruch 9, wobei die Reflexionseinheit (36) dazu eingerichtet ist, eingehende Radarsignale zu reflektieren und zu modifizieren, um zusätzliche Informationen in den reflektierten Signalen zu codieren, insbesondere durch Phasen- oder Frequenzmodulation.

11. Schutzeinrichtung nach Anspruch 10, wobei die Auswerteeinheit dazu eingerichtet ist, die Reaktion auszulösen, wenn die zusätzlichen Informationen nicht oder unvollständig empfangen werden.

12. Schutzeinrichtung nach einem der Ansprüche 9 bis 11, wobei die Reflexionseinheit (36) eine Vielzahl von Reflexionseinheiten aufweist.

13. Schutzeinrichtung nach Anspruch 12, wobei jede Reflexionseinheit (36) der Vielzahl von Reflexionseinheiten jeweils einer Radareinheit (30) der Vielzahl von Radareinheiten zugeordnet ist, insbesondere wobei jede Reflexionseinheit (36) der Vielzahl von Reflexionseinheiten dazu eingerichtet ist, die jeweils reflektierten Signale mit eindeutigen Identifikationsdaten zu codieren.

14. Schutzeinrichtung nach einem der Ansprüche 1 bis 13, wobei die Radarsignale (22) elektromagnetische Strahlung im Frequenzbereich von 2 GHz bis 325 GHz sind, vorzugsweise im Bereich von 57 GHz bis 64 GHz.

15. Schutzeinrichtung nach einem der Ansprüche 1 bis 14, wobei jede der Radareinheiten (30) ein Ein-Chip-Radarsensor ist, insbesondere mit einer integrierten Antenne auf oder in einem den Ein-Chip-Radarsensor umschließenden Gehäuse.
